# EUROPÄISCHE PATENTSCHRIFT

(11) **EP 3 295 231 B1**
(45) Veröffentlichungstag und Bekanntmachung des Hinweises auf die Patenterteilung: **23.02.2022**
(21) Anmeldenummer: 16729761.3
(22) Anmeldetag: 03.05.2016
(51) Int. Cl.: G02B 6/28, G02B 6/125, G02B 6/12, G02B 6/122, G02B 6/30, G02B 6/293, G02B 6/42

(54) **OPTOELEKTRONISCHES BAUELEMENT**
OPTOELECTRONIC COMPONENT
DISPOSITIF OPTO-ÉLECTRONIQUE

(30) Priorität: 15.05.2015 DE 102015208983
(43) Veröffentlichungstag der Anmeldung: 21.03.2018
(73) Patentinhaber: Sicoya GmbH, 12489 Berlin (DE)
(72) Erfinder: MEISTER, Stefan, 12587 Berlin (DE); RHEE, Hanjo, 10439 Berlin (DE); THEISS, Christoph, 14169 Berlin (DE); AL-SAADI, Aws, 10559 Berlin (DE)
(74) Vertreter: Fischer, Uwe
(86) Internationale Anmeldenummer: PCT/DE2016/200201
(87) Internationale Veröffentlichungsnummer: WO 2016/184460

(56) Entgegenhaltungen:
- US-A1- 2010 265 504
- US-A1- 2010 322 555
- US-A1- 2012 294 568
- WIM BOGAERTS ET AL: "A polarization-diversity wavelength duplexer circuit in silicon-on-insulator photonic wires", OPTICS EXPRESS, Bd. 15, Nr. 4, 19. Februar 2007 (2007-02-19), Seite 1567, XP055278140, ISSN: 2161-2072, DOI: 10.1364/OE.15.001567 in der Anmeldung erwähnt
- WIM BOGAERTS ET AL: "Silicon-on -insulator nanophotonics", OPTOMECHATRONIC MICRO/NANO DEVICES AND COMPONENTS III : 8 - 10 OCTOBER 2007, LAUSANNE, SWITZERLAND; [PROCEEDINGS OF SPIE , ISSN 0277-786X], SPIE, BELLINGHAM, WASH, Bd. 5956, Nr. 1, 16. September 2005 (2005-09-16), Seiten 1-15, XP002488407, ISBN: 978-1-62841-730-2
- VAN LAERE F ET AL: "Compact grating couplers between optical fibers and Silicon-on-Insulator photonic wire waveguides with 69% coupling efficiency", OPTICAL FIBER COMMUNICATION CONFERENCE, OFC 2006; IEEE - PISCATAWAY, NJ, USA,, 2. Januar 2006 (2006-01-02), Seiten 1-5, XP008151262, DOI: 10.1109/OFC.2006.216051 ISBN: 978-1-55752-803-2
- HALIR R ET AL: "Reducing Polarization-Dependent Loss of Silicon-on-Insulator Fiber to Chip Grating Couplers", IEEE PHOTONICS TECHNOLOGY LETTERS, IEEE SERVICE CENTER, PISCATAWAY, NJ, US, Bd. 22, Nr. 6, 15. März 2010 (2010-03-15), Seiten 389-391, XP011303538, ISSN: 1041-1135

## Beschreibung

Die Erfindung bezieht sich auf ein optoelektronisches Bauelement mit den Merkmalen gemäß dem Oberbegriff des Patentanspruchs 1 sowie auf ein Verfahren zum Betreiben optoelektronischer Bauelemente.

Aus dem Stand der Technik sind optoelektronische Bauelemente mit Wellenleitern und Koppelelementen aus den Druckschriften WO2014/056105-A2 und US2012/294568-A1 bekannt.

Die Druckschrift "A polarization-diversity wavelength duplexer circuit in silicon-on-insulator photonic wires" (Wim Bogaerts, Dirk Taillaert, Pieter Dumon, Dries Van Thourhout, Roel Baets; 19. Februar 2007 / Vol. 15, No. 4 / OPTICS EX-PRESS 1567) offenbart ein optoelektronisches Bauelement mit einem in einer Ebene des Bauelements integrierten optischen Wellenleiter, der in der Ebene des Bauelements optische Strahlung führen kann, und einem mit dem Wellenleiter in Verbindung stehenden Koppelelement, das in dem Wellenleiter geführte und von diesem in das Koppelelement eingespeiste optische Strahlung - entlang einer Hauptkoppelstrecke - aus der Ebene heraus koppeln kann und/oder winklig in die Ebene des Wellenleiters eingespeiste optische Strahlung - entlang der Hauptkoppelstrecke - in den Wellenleiter und damit in die Ebene des Bauelements hinein koppeln kann.

Ein anderes Bauelement mit Koppelelement ist aus der Druckschrift US 2010/322555 A1 bekannt.

Der Erfindung liegt die Aufgabe zugrunde, ein optoelektronisches Bauelement der angegebenen Art weiter zu verbessern.

Diese Aufgabe wird erfindungsgemäß durch ein optoelektronisches Bauelement mit den Merkmalen gemäß Patentanspruch 1 gelöst. Vorteilhafte Ausgestaltungen des erfindungsgemäßen Bauelements sind in Unteransprüchen angegeben.

Danach ist erfindungsgemäß vorgesehen, dass das optoelektronische Bauelement zusätzlich zu dem bereits erwähnten Wellenleiter - nachfolgend erster Wellenleiter genannt - einen zweiten Wellenleiter aufweist, der mit seiner Längsachse winklig zu der Ebene, in der der integrierte optische Wellenleiter integriert ist und Strahlung führen kann, angeordnet ist, und das Koppelelement mit dem ersten und zweiten Wellenleiter in Verbindung steht und die in dem ersten Wellenleiter geführte und in das Koppelelement eingespeiste optische Strahlung - entlang der Hauptkoppelstrecke - in Richtung aus der Ebene heraus und in den zweiten Wellenleiter hinein koppeln kann und/oder in dem zweiten Wellenleiter geführte und von diesem in das Koppelelement eingespeiste optische Strahlung - entlang der Hauptkoppelstrecke - in den ersten Wellenleiter und damit in die Ebene des Bauelements hinein koppeln kann, der integrierte optische Wellenleiter und das Koppelelement in einem Halbleiterchip des Bauelements integriert sind und das optoelektronische Bauelement eine mit dem Detektor in Verbindung stehende Steuereinheit aufweist, die anhand des Detektorsignals zumindest eine Betriebsgröße des optoelektronischen Bauelements, nämlich die Temperatur des Halbleiterchips des optoelektronischen Bauelements, mittels eines Heizelements beeinflusst.

Ein wesentlicher Vorteil des erfindungsgemäßen Bauelements ist darin zu sehen, dass die Verluststrahlung, die das Koppelelement erzeugt, erfindungsgemäß ausgewertet und zur Steuerung des Bauelements, nämlich zur Steuerung der Temperatur des Halbleiterchips genutzt wird. Konkret ist erfindungsgemäß vorgesehen, mittels eines Detektors die Verluststrahlung des Koppelelements zu messen und anhand des Detektorsignals die Temperatur des Halbleiterchips des Bauelements zu beeinflussen. Mit anderen Worten wird erfindungsgemäß Verluststrahlung, die bei bisherigen vorbekannten Bauelementen ungenutzt bleibt, gezielt als Messgröße zur Steuerung der Temperatur des Halbleiterchips herangezogen.

Auch kann vorgesehen sein, dass das optoelektronische Bauelement ein Sendeelement, insbesondere ein mit dem ersten oder zweiten Wellenleiter in Verbindung stehendes Sendeelement, aufweist. Bei einer solchen Ausgestaltung ist es vorteilhaft, wenn die Steuereinheit derart ausgestaltet ist, dass sie anhand des Detektorsignals die Sendeleistung des Sendeelements als die Betriebgröße oder eine der Betriebgrößen des optoelektronischen Bauelements beeinflusst.

Vorzugsweise liegt die Öffnungsquerschnittsnormale der Einkoppelstirnfläche des Detektors parallel zu der Ebene des Bauelements, in der der erste Wellenleiter integriert ist und seine optische Strahlung führen kann.

Das Bauelement weist vorzugsweise einen Halbleiterchip auf oder besteht aus einem solchen. Die Ebene, in der der erste Wellenleiter optische Strahlung führen kann, ist vorzugsweise eine Chipebene des Halbleiterchips, insbesondere eine Schichtebene einer Halbleiterschicht eines Schichtstapels des Halbleiterchips.

Vorzugsweise koppelt das Koppelelement winklig in die Ebene des ersten Wellenleiters eingespeiste optische Strahlung - entlang mindestens zweier Hauptkoppelstrecken - in den ersten Wellenleiter und in mindestens einen weiteren Wellenleiter, der in derselben Ebene des Bauelements wie der erste Wellenleiter liegt und dort optische Strahlung führen kann.

Der Koppelwirkungsgrad des Koppelelements ist bezüglich der mindestens zwei Hauptkoppelstrecken bevorzugt jeweils kleiner als eins, und das Koppelelement weist pro Hauptkoppelstrecke vorzugsweise jeweils eine zugeordnete Nebenkoppelstrecke auf.

Bezüglich der Einstrahlung wird es darüber hinaus als vorteilhaft angesehen, wenn das Koppelelement bei winkliger Einstrahlung optischer Strahlung in die Ebene des Wellenleiters, insbesondere bei Einstrahlung optischer Strahlung durch den zweiten Wellenleiter, - also bei Strahlungsumlenkung entlang der mindestens zwei Hauptkoppelstrecken - entlang jeder der Nebenkoppelstrecken jeweils eine optische Verluststrahlung ausgibt, die proportional oder zumindest annähernd proportional zu der entlang der jeweiligen Hauptkoppelstrecke übertragenen Strahlung ist, und der Detektor zumindest eine der Verluststrahlungen, vorzugsweise alle Verluststrahlungen, ganz oder zumindest zum Teil erfasst.

Das Koppelelement koppelt die in dem ersten und/oder in einem der weiteren Wellenleiter geführte und von diesem in das Koppelelement eingespeiste optische Strahlung vorzugsweise jeweils entlang der jeweiligen Hauptkoppelstrecken winklig aus der Ebene der Wellenleiter aus und dadurch beispielsweise in den zweiten Wellenleiter ein.

Bezüglich der Ausgestaltung des Detektors wird es als vorteilhaft angesehen, wenn der Detektor eine Photodiode ist oder eine solche umfasst. Eine Detektorschicht der Photodiode liegt vorzugsweise in derjenigen Ebene, in der der erste Wellenleiter integriert ist und Strahlung führen kann, und/oder in einer dazu parallelen Ebene.

Die Photodiode kann beispielsweise als Germanium-, Indiumphosphid-, Galliumarsenid- oder Indiumgalliumarsenid-Photodiode, zum Beispiel in Form einer pin- oder pn-Diode, realisiert sein.

Das Koppelelement umfasst vorzugsweise ein Gitter, einen Spiegel und/oder eine photonische Kristallstruktur.

Wie weiter unten im Zusammenhang mit den Figuren im Einzelnen beispielhaft noch näher gezeigt ist, wird es als vorteilhaft angesehen, wenn der integrierte optische Wellenleiter im Bereich des Koppelelements geradlinig ist und zwei geradlinige Wellenleiterabschnitte aufweist, die an das Koppelelement unmittelbar angrenzen; die geradlinigen Wellenleiterabschnitte fluchten vorzugsweise - in Längsrichtung des Wellenleiters bzw. entlang der Ausbreitungsrichtung der optischen Strahlung gesehen - bzw. liegen geradlinig hintereinander.

Einer der zwei geradlinigen Wellenleiterabschnitte bildet bevorzugt die Hauptkoppelstrecke oder zumindest einen Abschnitt der Hauptkoppelstrecke. Der andere der zwei geradlinigen Wellenleiterabschnitte bildet bevorzugt die Nebenkoppelstrecke oder zumindest einen Abschnitt der Nebenkoppelstrecke.

Bei einer besonders bevorzugten Ausgestaltung ist vorgesehen, dass
- der integrierte optische Wellenleiter - nachfolgend erster Wellenleiter genannt - im Bereich des Koppelelements geradlinig ist und zwei geradlinige Wellenleiterabschnitte aufweist, die an das Koppelelement unmittelbar angrenzen und - in Längsrichtung des Wellenleiters bzw. entlang der Ausbreitungsrichtung der optischen Strahlung gesehen - fluchten (bzw. geradlinig hintereinander liegen),
- das Koppelelement winklig in die Ebene des ersten Wellenleiters und in das Koppelelement eingespeiste optische Strahlung - entlang mindestens zweier Hauptkoppelstrecken - in den ersten Wellenleiter und in mindestens einen weiteren Wellenleiter, der in derselben Ebene des Bauelements wie der erste Wellenleiter liegt und dort optische Strahlung führen kann, koppelt und
- der mindestens eine weitere Wellenleiter im Bereich des Koppelelements geradlinig ist und zwei geradlinige Wellenleiterabschnitte aufweist, die an das Koppelelement unmittelbar angrenzen und - in Längsrichtung des Wellenleiters bzw. entlang der Ausbreitungsrichtung der optischen Strahlung gesehen - fluchten (bzw. geradlinig hintereinander liegen).

Der erste Wellenleiter und der mindestens eine weitere Wellenleiter sind im Bereich des Koppelelements jeweils geradlinig und stehen vorzugsweise in einem Winkel zwischen 70 und 90 Grad aufeinander.

Das Koppelelement ist für die Wellenlänge, die Wellenlängen oder das Wellenlängenband der optischen Strahlung, die in dem optoelektronischen Bauelement oder zumindest in dem ersten Wellenleiter, dem zweiten Wellenleiter und/oder dem mindestens einen weiteren Wellenleiter, geführt wird und die das Koppelelement koppelt oder koppeln soll, vorzugsweise wellenlängenunabhängig oder zumindest näherungsweise wellenlängenunabhängig. Unter dem Begriff "näherungsweise wellenlängenunabhängig" wird hier verstanden, dass der Koppelwirkungsgrad für die Wellenlängen bzw. das Wellenlängenband der optischen Strahlung weniger als 20 % (~1 dB), bevorzugt weniger als 5 % (~0,2 dB), schwankt.

Die Erfindung bezieht sich darüber hinaus auf ein Verfahren mit den Merkmalen gemäß dem Patentanspruchs 15.

Bezüglich der Vorteile des erfindungsgemäßen Verfahrens sei auf die obigen Ausführungen im Zusammenhang mit dem erfindungsgemäßen optoelektronischen Bauelement verwiesen.

Die Erfindung wird nachfolgend anhand von Ausführungsbeispielen näher erläutert; dabei zeigen beispielhaft
- Figur 1: ein Ausführungsbeispiel für ein erfindungsgemäßes optoelektronisches Bauelement, bei dem eine Lichtleitfaser winklig zu einem Halbleiterchip ausgerichtet ist und ein Koppelelement die Lichtleitfaser mit einem in dem Halbleiterchip integrierten Wellenleiter koppelt,
- Figur 2: das optoelektronische Bauelement gemäß Figur 1 im Querschnitt,
- Figur 3: ein Ausführungsbeispiel für ein optoelektronisches Bauelement, das mit einem Sendeelement ausgestattet ist,
- Figur 4: ein Ausführungsbeispiel für ein erfindungsgemäßes optoelektronisches Bauelement, bei dem ein Koppelelement zwei Hauptkoppelstrecken und zwei Nebenkoppelstrecken aufweist,
- Figur 5: ein Ausführungsbeispiel für ein optoelektronisches Bauelement, bei dem über eine Nebenkoppelstrecke aus einem Koppelelement ausgekoppelte Verluststrahlung über einen Ringresonator in einen Detektor eingekoppelt wird, und
- Figur 6: ein weiteres Ausführungsbeispiel für ein optoelektronisches Bauelement, das mit einem Sendeelement ausgestattet ist.

In den Figuren werden der Übersicht halber für identische oder vergleichbare Komponenten stets dieselben Bezugszeichen verwendet.

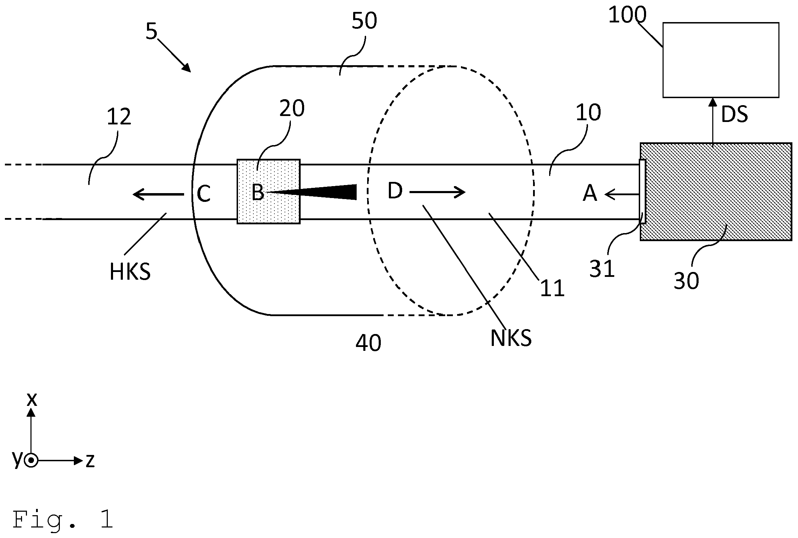

Die Figur 1 zeigt in einer Draufsicht ein optoelektronisches Bauelement 5, bei dem ein integrierter optischer Wellenleiter 10, ein Koppelelement 20 sowie ein Detektor 30 in einem Halbleiterchip 40 des Bauelements 5 integriert sind. Die Bezugszeichen X, Y und Z bezeichnen die Raumkoordinaten des Bauelements.

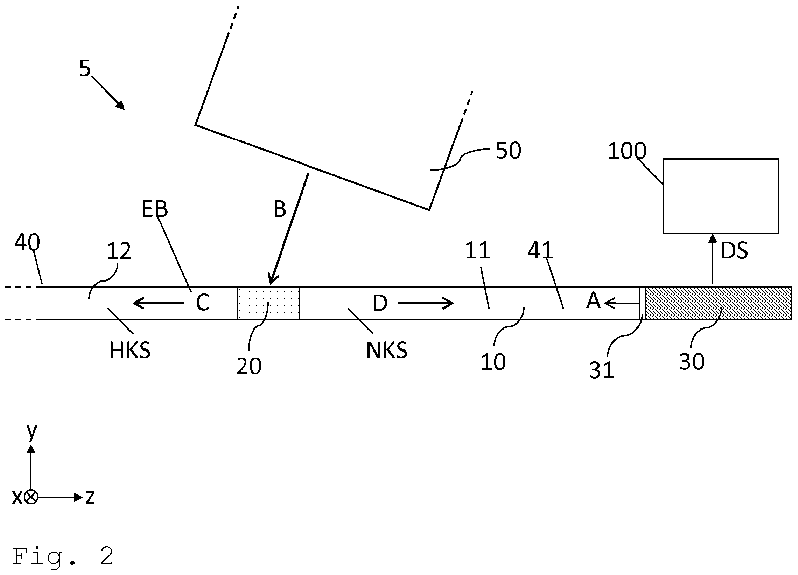

Das Koppelelement 20 koppelt den integrierten optischen Wellenleiter 10 - nachfolgend erster Wellenleiter genannt - mit einem zweiten Wellenleiter, der bei dem Ausführungsbeispiel gemäß Figur 1 durch eine Lichtleitfaser 50 gebildet ist. Die Lichtleitfaser 50 steht mit ihrer Längsachse winklig zu der Ebene EB (vgl. Figur 2), in der der integrierte optische Wellenleiter 10, das Koppelelement 20 und der Detektor 30 in dem Halbleiterchip 40 integriert sind.

Das Koppelelement 20 unterteilt den integrierten optischen Wellenleiter 10 bei der Darstellung gemäß Figur 1 in einen in der Figur 1 rechten Wellenleiterabschnitt 11 und einen in der Figur 1 linken Wellenleiterabschnitt 12. Das Koppelelement 20 ist derart ausgestaltet, dass dieses hauptsächlich den linken Wellenleiterabschnitt 12 mit der Lichtleitfaser 50 koppelt und zwischen dem linken Wellenleiterabschnitt 12 und der Lichtleitfaser 50 eine Hauptkoppelstrecke HKS bildet. Das Koppelelement 20 kann beispielsweise durch einen 1D- oder 2D-Gitterkoppler oder eine Umlenkeinheit gebildet sein.

Der Koppelwirkungsgrad des Koppelelements 20 ist bezüglich der Hauptkoppelstrecke HKS, also zwischen dem linken Wellenleiterabschnitt 12 und der Lichtleitfaser 50, zwar sehr groß, aber - aufgrund von Beugung, Brechung, Streuung und/oder Reflektion - kleiner als eins, so dass das Koppelelement 20 die Lichtleitfaser 50 auch mit dem in der Figur 1 rechten Wellenleiterabschnitt 11 koppelt und zwischen dem rechten Wellenleiterabschnitt 11 und der Lichtleitfaser 50 eine Nebenkoppelstrecke NKS bildet.

Bezüglich der Ausgestaltung des Detektors 30 lässt sich in der Figur 1 erkennen, dass eine mit dem integrierten optischen Wellenleiter 10 in Verbindung stehende Einkoppelstirnfläche 31 des Detektors 30 derart ausgerichtet ist, dass die Öffnungsquerschnittsnormale A der Einkoppelstirnfläche 31 parallel zu der Ebene des Halbleiterchips 40 liegt, in der der integrierte optische Wellenleiter 10 und das Koppelelement 20 integriert sind. Der Detektor 30 kann beispielsweise als Germanium-, Indiumphosphid-, Galliumarsenid- oder Indiumgalliumarsenid-Photodiode oder als p- und n-dotierter Halbleiterbereich als Teil einer pin- oder pn-Diode realisiert sein.

Mit dem Detektor 30 steht eine Steuereinheit 100 in Verbindung, die ein von dem Detektor 30 erzeugtes Detektorsignal DS auswertet und unter Heranziehung des Detektorsignals DS zumindest eine Betriebsgröße des optoelektronischen Bauelements 5 beeinflusst.

Die Funktionsweise des optoelektronischen Bauelements 5 soll nachfolgend beispielhaft für den Fall erläutert werden, dass die Lichtleitfaser 50 optische Strahlung B in das Koppelelement 20 einkoppelt. Im Falle einer Einkopplung optischer Strahlung B von der Lichtleitfaser 50 wird das Koppelelement 20 den Großteil der Strahlung B entlang der Hauptkoppelstrecke HKS in den linken Wellenleiterabschnitt 12 einkoppeln; die gekoppelte Strahlung ist in der Figur 1 mit dem Bezugszeichen C gekennzeichnet.

Ein kleiner Teil der optischen Strahlung B wird - aufgrund von Beugung, Brechung, Streuung und/oder Reflektion im Koppelelement 20 - über die Nebenkoppelstrecke NKS als Verluststrahlung D in den rechten Wellenleiterabschnitt 11 gekoppelt und über diesen zum Detektor 30 übertragen. Der Detektor 30 erzeugt das Detektorsignal DS, das zur Steuereinheit 100 gelangt.

Anhand der Größe des Detektorsignals DS kann die Steuereinheit 100 ermitteln, welche Strahlungsleistung über die Hauptkoppelstrecke HKS in den Halbleiterchip 40 eingekoppelt wird, und das optische Bauelement 5 entsprechend einstellen. Beispielsweise kann die Steuereinheit 100 derart ausgestaltet sein, dass sie anhand des Detektorsignals DS ein Kühlund/oder Heizelement des Bauelements 5 steuert, um die Temperatur des optoelektronischen Bauelements 5 in einem gewünschten Temperaturbereich zu halten.

In der Figur 1 ist erkennbar, dass der linke Wellenleiterabschnitt 12 und der rechte Wellenleiterabschnitt 11 im Bereich des Koppelelements jeweils geradlinig sind und zwei geradlinige Wellenleiterabschnitte bilden, die an das Koppelelement 20 unmittelbar angrenzen. Die geradlinigen Wellenleiterabschnitte fluchten - in Längsrichtung des Wellenleiters bzw. entlang der Ausbreitungsrichtung der optischen Strahlung gesehen - bzw. liegen in Längsrichtung des Wellenleiters bzw. entlang der Ausbreitungsrichtung der optischen Strahlung gesehen hintereinander.

Die Figur 2 zeigt das optoelektronische Bauelement 5 gemäß Figur 1 im Querschnitt. Man erkennt die winklige Anordnung der Lichtleitfaser 50 relativ zur Ebene EB und damit zum optischen Wellenleiter 10, der in der Ebene EB des Halbleiterchips 40 integriert ist.

Darüber hinaus lässt sich erkennen, dass der integrierte optische Wellenleiter 10, das Koppelelement 20 sowie der Detektor 30 in einer oder mehreren Halbleiterschichten 41 integriert sind, die zu einem nicht weiter dargestellten Halbleiterschichtstapel des Halbleiterchips 40 gehören. Bei dem Halbleiterchip 40 kann es sich beispielsweise um SOI (silicon on insulator)- Material handeln; in diesem Fall handelt es sich bei der Halbleiterschicht 41 vorzugsweise um eine Siliziumschicht, die auf einer Siliziumdioxidschicht aufliegt.

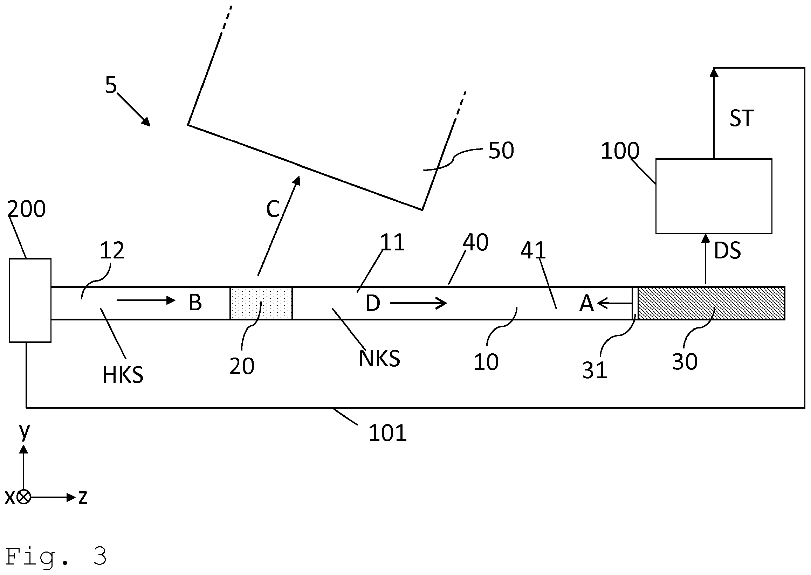

Die Figur 3 zeigt ein Ausführungsbeispiel für ein optoelektronisches Bauelement 5, das im Wesentlichen dem ersten Ausführungsbeispiel gemäß den Figuren 1 und 2 entspricht. Im Unterschied zu dem ersten Ausführungsbeispiel ist bei dem Ausführungsbeispiel gemäß Figur 3 der linke Wellenleiterabschnitt 12 des optischen Wellenleiters 10 mit einem Sendeelement 200 verbunden.

Das Sendeelement 200 kann optische Strahlung B erzeugen und in das Koppelelement 20 einkoppeln. Das Koppelelement 20 wird die eingekoppelte optische Strahlung B entlang der Hauptkoppelstrecke HKS aus der Ebene der Halbleiterschicht 41 und damit aus dem Halbleiterchip 40 auskoppeln und in die winklig zum Halbleiterchip 40 angeordnete Lichtleitfaser 50 einkoppeln. Die aus dem Halbleiterchip 40 ausgekoppelte Strahlung ist in der Figur 3 mit dem Bezugszeichen C gekennzeichnet.

Darüber hinaus wird das Koppelelement 20 - aufgrund von Beugung, Brechung, Streuung und/oder Transmission im Koppelelement 20 - einen kleinen Anteil der optischen Strahlung B in den rechten Wellenleiterabschnitt 11 - entlang der Nebenkoppelstrecke NKS - als Verluststrahlung D einkoppeln und somit zu dem Detektor 30 übertragen, der die Verluststrahlung D messtechnisch erfasst.

Der Detektor 30 erzeugt ein Detektorsignal DS, das zur Steuereinheit 100 gelangt. Die Steuereinheit 100 wertet das Detektorsignal DS aus und beeinflusst anhand des Detektorsignals beispielsweise zumindest eine Betriebsgröße des Sendeelements 200, beispielsweise die Sendeleistung des Sendeelements 200, und/oder beispielsweise zumindest ein Heizelement des optoelektronischen Bauelements 5, um das optoelektronische Bauelement 5, insbesondere den Halbleiterchip 40, in einem vorgegebenen Betriebsparameterbereich, beispielsweise in einem vorgegebenen Temperaturbereich, zu halten. Die Ansteuerung des Sendeelements 200 erfolgt bei dem Ausführungsbeispiel gemäß Figur 3 durch ein Steuersignal ST, das die Steuereinheit 100 über eine Steuerleitung 101 zum Sendeelement 200 überträgt.

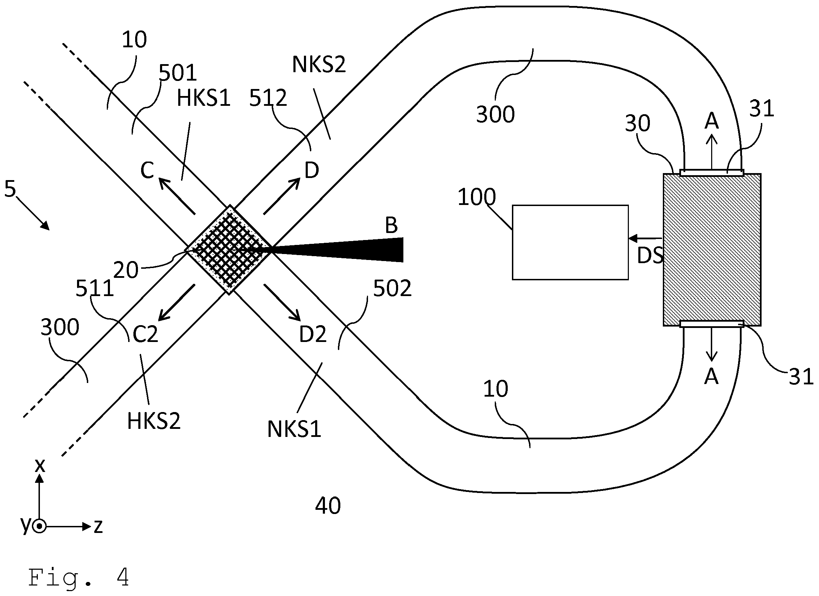

Die Figur 4 zeigt ein Ausführungsbeispiel für ein optoelektronisches Bauelement 5, bei dem ein in einem Halbleiterchip 40 integriertes Koppelelement 20 zwei Hauptkoppelstrecken HKS1 und HKS2 sowie zwei Nebenkoppelstrecken NKS1 und NKS2 aufweist bzw. bereitstellt.

Über die erste Hauptkoppelstrecke HKS1 koppelt das Koppelelement 20 einen in dem Halbleiterchip 40 integrierten optischen Wellenleiter 10 - nachfolgend erster Wellenleiter genannt - mit einem zweiten, außerhalb des Halbleiterchips 40 befindlichen zweiten Wellenleiter, bei dem es sich beispielsweise um eine Lichtleitfaser wie die Lichtleitfaser 50 gemäß den Figuren 1 bis 3 handeln kann; der zweite Wellenleiter ist in der Figur 4 aus Gründen der Übersicht nicht weiter dargestellt.

Darüber hinaus koppelt das Koppelelement 20 den zweiten Wellenleiter mit einem weiteren Wellenleiter - nachfolgend dritter Wellenleiter 300 genannt -, der - genauso wie der Wellenleiter 10 - in dem Halbleiterchip 40 integriert ist und vorzugsweise in derselben Wellenleiterebene wie der Wellenleiter 10 angeordnet ist. Der erste Wellenleiter 10 und der dritte Wellenleiter 300 stehen vorzugsweise senkrecht zueinander. Wird beispielsweise durch den zweiten Wellenleiter optische Strahlung B in das Koppelelement 20 durch winklige Einstrahlung eingekoppelt, so wird diese über die Hauptkoppelstrecken HKS1 und HKS2 sowohl in den ersten Wellenleiter 10 als auch in den dritten Wellenleiter 300 eingekoppelt; die eingekoppelte Strahlung ist in der Figur 4 mit dem Bezugszeichen C und C2 gekennzeichnet.

Darüber hinaus wird das Koppelement 20 Verluststrahlung D und D2 über die Nebenkoppelstrecken NKS1 und NKS2 in die beiden Wellenleiter 10 und 300 einkoppeln. Die Verluststrahlung D und D2 gelangt über die Wellenleiter 10 und 300 zu Einkoppelstirnflächen 31 eines Detektors 30, der die Verluststrahlung D und D2 messtechnisch erfasst und ausgangsseitig ein entsprechendes Detektorsignal DS für eine Steuereinheit 100 erzeugt.

Die Steuereinheit 100 kann anhand des Detektorsignals zumindest eine Betriebsgröße des optoelektronischen Bauelements 5 beeinflussen, wie dies im Zusammenhang mit den Figuren 1 bis 3 bereits oben im Detail erläutert worden ist.

In der Figur 4 ist erkennbar, dass die Wellenleiterabschnitte 501 und 502 des Wellenleiters 10 und die Wellenleiterabschnitte 511 und 512 des Wellenleiters 300 im Bereich des Koppelelements jeweils geradlinig sind. Die geradlinigen Wellenleiterabschnitte 501 und 502 bzw. 511 und 512 fluchten - in Längsrichtung des Wellenleiters bzw. entlang der Ausbreitungsrichtung der optischen Strahlung gesehen - paarweise.

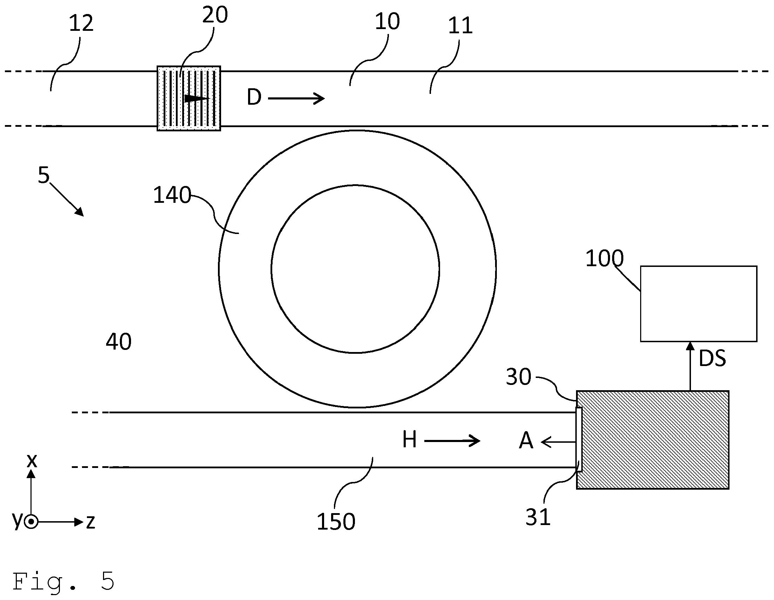

In den Abschnitt zwischen dem Koppelelement 20 und dem Detektor 30 können im Übrigen weitere passive oder aktive photonische Bauelemente, wie beispielweise Ringresonatoren oder Mach-Zehnder Interferometer eingefügt werden. Diese Bauelemente können zum Beispiel Filterfunktionen zur Verringerung von Signalübersprechung oder zur spektralen Rauschunterdrückung übernehmen. Bei einer Ausführung mit einem Ringresonator kann beispielsweise eine spezifische Frequenzkomponente eines modulierten Signals herausgefiltert und in den Detektor 30 eingespeist werden. Die Figur 5 zeigt ein Ausführungsbeispiel für ein optoelektronisches Bauelement 5, das mit einem Ringresonator 140 ausgestattet ist.

Bei dem Ausführungsbeispiel gemäß Figur 5 wird die über eine Nebenkoppelstrecke NKS aus einem Koppelelement 20 ausgekoppelte Verluststrahlung D über den Ringresonator 140 in einen Wellenleiter 150 und über den Wellenleiter 150 in einen Detektor 30 gekoppelt. Durch das Transmissionsspektrum des Ringresonators 140 erfolgt eine spektrale Filterung, welche beispielsweise über die Ringgeometrie angepasst bzw. eingestellt werden kann. Beispielsweise können bestimmte spektrale Modulationsseitenbänder eines modulierten Datensignals selektiv transmittiert werden. Die gefilterte Verluststrahlung H gelangt zu dem Detektor 30.

Der Detektor 30 steht mit einer Steuereinheit 100 in Verbindung, die anhand des Detektorsignals DS bzw. anhand der gefilterten Verluststrahlung H das optoelektronische Bauelement 5 ansteuert bzw. zumindest eine Betriebsgröße des optoelektronischen Bauelements 5 beeinflusst. Bezüglich der Arbeitsweise der Steuereinheit 100 gelten die obigen Ausführungen im Zusammenhang mit den Ausführungsbeispielen gemäß den Figuren 1 bis 4 entsprechend.

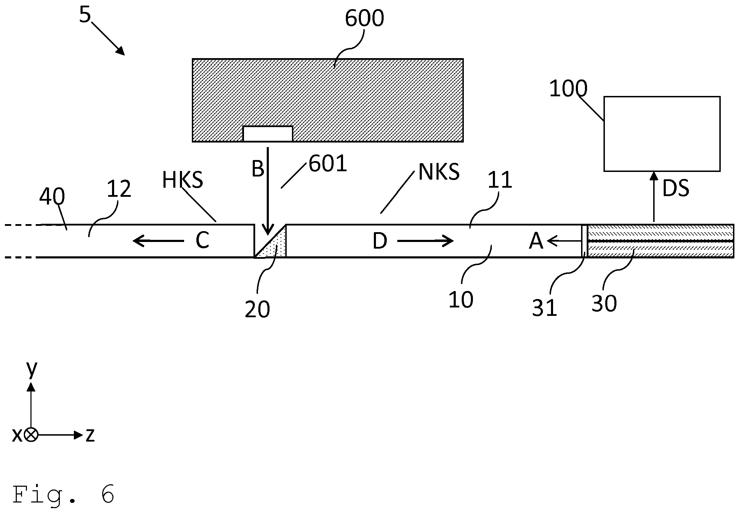

Die Figur 6 zeigt ein Ausführungsbeispiel für ein optoelektronisches Bauelement 5, bei dem ein Sendeelement 600 über eine Freistrahlverbindung 601 mit einem Halbleiterchip 40 gekoppelt ist. In dem Halbleiterchip 40 sind ein Koppelelement 20, ein Wellenleiter 10 sowie ein Detektor 30 integriert.

Das Bauelement 5 gemäß Figur 6 kann beispielsweise wie folgt betrieben werden:
Das Sendeelement 600 erzeugt optische Strahlung B, die über die Freistrahlverbindung 601 winklig, beispielsweise rechtwinklig, (bezogen auf die Chipebene, in der das Koppelelement 20, der Wellenleiter 10 und der Detektor 30 integriert sind) in das Koppelelement 20 und damit in den Halbleiterchip 40 eingespeist wird. Das Koppelelement 20 koppelt den Großteil der eingespeisten Strahlung über eine Hauptkoppelstrecke HKS in den in der Figur 6 linken Wellenleiterabschnitt 12 des Wellenleiters 10; die gekoppelte Strahlung ist in der Figur 6 mit dem Bezugszeichen C gekennzeichnet.

Einen kleinen Anteil der eingespeisten optischen Strahlung B wird das Koppelelement 20 über eine Nebenkoppelstrecke NKS als Verluststrahlung D in den in der Figur 6 rechten Wellenleiterabschnitt 11 einkoppeln. Die Verluststrahlung D gelangt zu dem Detektor 30, der die Verluststrahlung D detektiert und ein Detektorsignal DS für eine nachgeordnete Steuereinheit 100 erzeugt. Die Steuereinheit 100 beeinflusst anhand des Detektorsignals DS zumindest eine Betriebsgröße des optoelektronischen Bauelements 5, beispielsweise die Temperatur des Halbleiterchips 40 und/oder die Sendeleistung des Sendeelements 600.

Der Schutzbereich dieses europäischen Patents wird durch die Patentansprüche bestimmt. Die Beschreibung und die Zeichnungen sind jedoch zur Auslegung der Patentansprüche heranzuziehen. 11

### Bezugszeichenliste

- 5: optoelektronisches Bauelement
- 10: erster Wellenleiter
- 11: rechter Wellenleiterabschnitt
- 12: linker Wellenleiterabschnitt
- 20: Koppelelement
- 30: Detektor
- 31: Einkoppelstirnfläche
- 40: Halbleiterchip
- 41: Halbleiterschichten
- 50: zweiter Wellenleiter/Lichtleitfaser
- 100: Steuereinheit
- 101: Steuerleitung
- 140: Ringresonator
- 150: Wellenleiter
- 200: Sendeelement
- 300: dritter Wellenleiter
- 501: Wellenleiterabschnitt
- 502: Wellenleiterabschnitt
- 511: Wellenleiterabschnitt
- 512: Wellenleiterabschnitt
- 600: Sendeelement
- 601: Freistrahlverbindung

- A: Öffnungsquerschnittsnormale
- B: optische Strahlung
- C: gekoppelte Strahlung
- C2: gekoppelte Strahlung
- D: Verluststrahlung
- D2: Verluststrahlung
- DS: Detektorsignal
- EB: Ebene
- H: Verluststrahlung
- HKS: Hauptkoppelstrecke
- HKS1: Hauptkoppelstrecke
- HKS2: Hauptkoppelstrecke
- NKS: Nebenkoppelstrecke
- NKS1: Nebenkoppelstrecke
- NKS2: Nebenkoppelstrecke
- ST: Steuersignal
- X: Raumkoordinate
- Y: Raumkoordinate
- Z: Raumkoordinate

## Patentansprüche

1. Optoelektronisches Bauelement (5) mit
- einem in einer Ebene (EB) des Bauelements (5) integrierten optischen Wellenleiter (10), der in der Ebene (EB) des Bauelements (5) optische Strahlung führen kann, und
- einem mit dem Wellenleiter (10) in Verbindung stehenden Koppelelement (20), das in dem Wellenleiter (10) geführte und von diesem in das Koppelelement (20) eingespeiste optische Strahlung - entlang einer Hauptkoppelstrecke (HKS) - aus der Ebene (EB) heraus koppeln kann und/oder winklig in die Ebene (EB) des Wellenleiters (10) eingespeiste optische Strahlung
- entlang der Hauptkoppelstrecke (HKS) - in den Wellenleiter (10) und damit in die Ebene (EB) des Bauelements (5) hinein koppeln kann,
- wobei der Koppelwirkungsgrad des Koppelelements (20) bezüglich der Hauptkoppelstrecke (HKS) kleiner als eins ist und das Koppelelement (20) - bei Einstrahlung optischer Strahlung - entlang einer Nebenkoppelstrecke (NKS) eine optische Verluststrahlung (D) ausgibt, die proportional oder zumindest annähernd proportional zu der entlang der Hauptkoppelstrecke (HKS) übertragenen Strahlung ist, und
- wobei das optoelektronische Bauelement (5) einen Detektor (30) aufweist, der mit dem Koppelelement (20) in Verbindung steht und die optische Verluststrahlung (D) ganz oder zumindest zum Teil erfasst und ein Detektorsignal (DS) erzeugt, wobei
- das optoelektronische Bauelement (5) zusätzlich zu dem bereits erwähnten Wellenleiter (10) - nachfolgend erster Wellenleiter (10) genannt - einen zweiten Wellenleiter (50) aufweist, der mit seiner Längsachse winklig zu der Ebene (EB), in der der integrierte optische Wellenleiter (10) integriert ist und Strahlung führen kann, angeordnet ist, und
- das Koppelelement (20) mit dem ersten und zweiten Wellenleiter (10, 50) in Verbindung steht und die in dem ersten Wellenleiter (10) geführte und in das Koppelelement (20) eingespeiste optische Strahlung - entlang der Hauptkoppelstrecke (HKS) - in Richtung aus der Ebene (EB) heraus und in den zweiten Wellenleiter (50) hinein koppeln kann und/oder in dem zweiten Wellenleiter (50) geführte und von diesem in das Koppelelement (20) eingespeiste optische Strahlung - entlang der Hauptkoppelstrecke (HKS) - in den ersten Wellenleiter (10) und damit in die Ebene (EB) des Bauelements (5) hinein koppeln kann,
- der integrierte optische Wellenleiter (10) und das Koppelelement (20) in einem Halbleiterchip (40) des Bauelements (5) integriert sind, und
- das optoelektronische Bauelement (5) eine mit dem Detektor (30) in Verbindung stehende Steuereinheit (100) aufweist, die anhand des Detektorsignals (DS) zumindest eine Betriebsgröße des optoelektronischen Bauelements (5), nämlich die Temperatur des Halbleiterchips (40) des optoelektronischen Bauelements (5), mittels eines Heizelements beeinflusst.

2. Optoelektronisches Bauelement (5) nach Anspruch 1,
**dadurch gekennzeichnet, dass**
- das optoelektronische Bauelement (5) ein Sendeelement (200), insbesondere ein mit dem ersten oder zweiten Wellenleiter (10, 50) in Verbindung stehendes Sendeelement (200), aufweist und
- die Steuereinheit (100) derart ausgestaltet ist, dass sie anhand des Detektorsignals (DS) die Sendeleistung des Sendeelements (200) als die Betriebgröße oder eine der Betriebsgrößen des optoelektronischen Bauelements (5) beeinflusst.

3. Optoelektronisches Bauelement (5) nach einem der voranstehenden Ansprüche,
**dadurch gekennzeichnet, dass**
die Öffnungsquerschnittsnormale (A) der Einkoppelstirnfläche (31) des Detektors (30) parallel zu der Ebene (EB) des Bauelements (5) liegt, in der der erste Wellenleiter (10) integriert ist und seine optische Strahlung führen kann.

4. Optoelektronisches Bauelement (5) nach einem der voranstehenden Ansprüche,
**dadurch gekennzeichnet, dass**
- das Bauelement (5) durch einen Halbleiterchip (40) gebildet ist und
- die Ebene (EB), in der der erste Wellenleiter (10) optische Strahlung führen kann, eine Chipebene des Halbleiterchips (40), insbesondere eine Schichtebene einer Halbleiterschicht (41) eines Schichtstapels des Halbleiterchips (40), ist.

5. Optoelektronisches Bauelement (5) nach einem der voranstehenden Ansprüche,
**dadurch gekennzeichnet, dass**
das Koppelelement (20) winklig in die Ebene (EB) des ersten Wellenleiters (10) und in das Koppelelement (20) eingespeiste optische Strahlung - entlang mindestens zweier Hauptkoppelstrecken (HKS1, HKS2) - in den ersten Wellenleiter (10) und in mindestens einen weiteren Wellenleiter (300), der in derselben Ebene (EB) des Bauelements (5) wie der erste Wellenleiter (10) liegt und dort optische Strahlung führen kann, koppelt.

6. Optoelektronisches Bauelement (5) nach Anspruch 5,
**dadurch gekennzeichnet, dass**
der Koppelwirkungsgrad des Koppelelements (20) bezüglich der mindestens zwei Hauptkoppelstrecken (HKS1, HKS2) jeweils kleiner als eins ist und das Koppelelement (20) pro Hauptkoppelstrecke (HKS1, HKS2) jeweils eine zugeordnete Nebenkoppelstrecke (NKS) aufweist.

7. Optoelektronisches Bauelement (5) nach Anspruch 6,
**dadurch gekennzeichnet, dass**
- das Koppelelement (20) bei winkliger Einstrahlung optischer Strahlung in die Ebene (EB) des Wellenleiters (10), insbesondere bei Einstrahlung optischer Strahlung durch den zweiten Wellenleiter (50), - also bei Strahlungsumlenkung entlang der mindestens zwei Hauptkoppelstrecken (HKS1, HKS) - entlang jeder der Nebenkoppelstrecken jeweils eine optische Verluststrahlung (D, D2) ausgibt, die proportional oder zumindest annähernd proportional zu der entlang der jeweiligen Hauptkoppelstrecke (HKS1, HKS2) übertragenen Strahlung ist, und
- der Detektor (30) zumindest eine der Verluststrahlungen (D, D2), vorzugsweise alle Verluststrahlungen, ganz oder zumindest zum Teil erfasst.

8. Optoelektronisches Bauelement (5) nach einem der voranstehenden Ansprüche 5-7,
**dadurch gekennzeichnet, dass**
das Koppelelement (20) diejenige optische Strahlung, die in dem ersten und/oder einem der weiteren Wellenleiter (10, 300) geführt wird und von diesem in das Koppelelement (20) eingespeist wird, entlang der jeweiligen Hauptkoppelstrecken (HKS1, HKS2) winklig aus der Ebene (EB) der Wellenleiter (10) auskoppelt, insbesondere in den zweiten Wellenleiter (50) einkoppelt.

9. Optoelektronisches Bauelement (5) nach einem der voranstehenden Ansprüche,
**dadurch gekennzeichnet, dass**
- der Detektor (30) eine Photodiode, die eine Detektorschicht zum Empfang von Strahlung aufweist, ist oder eine solche umfasst und
- die Detektorschicht in derjenigen Ebene (EB) liegt, in der der erste Wellenleiter (10) integriert ist und Strahlung führen kann, und/oder in einer dazu parallelen Ebene (EB) liegt.

10. Optoelektronisches Bauelement (5) nach einem der voranstehenden Ansprüche,
**dadurch gekennzeichnet, dass**
das Koppelelement (20) ein Gitter, einen Spiegel und/oder eine photonische Kristallstruktur umfasst.

11. Optoelektronisches Bauelement (5) nach einem der voranstehenden Ansprüche,
**dadurch gekennzeichnet, dass**
- der integrierte optische Wellenleiter (10) im Bereich des Koppelelements (20) geradlinig ist und zwei geradlinige Wellenleiterabschnitte (11, 12, 501, 502) aufweist, die an das Koppelelement (20) unmittelbar angrenzen, und
- die zwei geradlinigen Wellenleiterabschnitte (11, 12, 501, 502) - in Längsrichtung des Wellenleiters bzw. entlang der Ausbreitungsrichtung der optischen Strahlung gesehen - fluchten.

12. Optoelektronisches Bauelement (5) nach Anspruch 11, **dadurch gekennzeichnet, dass**
- einer der zwei geradlinigen Wellenleiterabschnitte (12, 501) die Hauptkoppelstrecke (HKS) bildet oder zumindest einen Abschnitt der Hauptkoppelstrecke (HKS) bildet und
- der andere der zwei geradlinigen Wellenleiterabschnitte (11, 502) die Nebenkoppelstrecke (NKS) bildet oder zumindest einen Abschnitt der Nebenkoppelstrecke (NKS) bildet.

13. Optoelektronisches Bauelement (5) nach einem der voranstehenden Ansprüche,
**dadurch gekennzeichnet, dass**
- der integrierte optische Wellenleiter (10) - nachfolgend erster Wellenleiter genannt - im Bereich des Koppelelements (20) geradlinig ist und zwei geradlinige Wellenleiterabschnitte (501, 502) aufweist, die an das Koppelelement (20) unmittelbar angrenzen und - in Längsrichtung des Wellenleiters bzw. entlang der Ausbreitungsrichtung der optischen Strahlung gesehen - fluchten,
- das Koppelelement (20) winklig in die Ebene (EB) des ersten Wellenleiters (10) und in das Koppelelement (20) eingespeiste optische Strahlung - entlang mindestens zweier Hauptkoppelstrecken (HKS1, HKS2) - in den ersten Wellenleiter (10) und in mindestens einen weiteren Wellenleiter (300), der in derselben Ebene (EB) des Bauelements (5) wie der erste Wellenleiter (10) liegt und dort optische Strahlung führen kann, koppelt und
- der mindestens eine weitere Wellenleiter im Bereich des Koppelelements (20) geradlinig ist und zwei geradlinige Wellenleiterabschnitte (511, 512) aufweist, die an das Koppelelement (20) unmittelbar angrenzen und - in Längsrichtung des Wellenleiters bzw. entlang der Ausbreitungsrichtung der optischen Strahlung gesehen - fluchten.

14. Verfahren zum Betreiben eines optoelektronischen Bauelements (5) mit einem in einer Ebene (EB) des Bauelements (5) integrierten optischen Wellenleiter (10), der in der Ebene (EB) des Bauelements (5) optische Strahlung führen kann, und einem mit dem Wellenleiter (10) in Verbindung stehenden Koppelelement (20), das in dem Wellenleiter (10) geführte und von diesem in das Koppelelements (20) eingespeiste optische Strahlung - entlang einer Hauptkoppelstrecke (HKS) - aus der Ebene (EB) heraus koppeln kann und/oder winklig in die Ebene (EB) des Wellenleiters (10) eingespeiste optische Strahlung - entlang der Hauptkoppelstrecke (HKS) - in den Wellenleiter (10) und damit in die Ebene (EB) des Bauelements (5) hinein koppeln kann,
- wobei der Koppelwirkungsgrad des Koppelelements (20) bezüglich der Hauptkoppelstrecke (HKS) kleiner als eins ist und das Koppelelement (20) - bei Einstrahlung optischer Strahlung - entlang einer Nebenkoppelstrecke (NKS) eine optische Verluststrahlung (D) ausgibt, die proportional oder zumindest annähernd proportional zu der entlang der Hauptkoppelstrecke (HKS) übertragenen Strahlung ist, und
- wobei die optische Verluststrahlung (D) ganz oder zumindest zum Teil erfasst und ein Detektorsignal (DS) erzeugt wird, wobei
- das optoelektronische Bauelement (5) zusätzlich zu dem bereits erwähnten Wellenleiter (10) - nachfolgend erster Wellenleiter (10) genannt - einen zweiten Wellenleiter (50) aufweist, der mit seiner Längsachse winklig zu der Ebene (EB), in der der integrierte optische Wellenleiter (10) integriert ist und Strahlung führen kann, angeordnet ist, und
- das Koppelelement (20) mit dem ersten und zweiten Wellenleiter (10, 50) in Verbindung steht und die in dem ersten Wellenleiter (10) geführte und in das Koppelelement (20) eingespeiste optische Strahlung - entlang der Hauptkoppelstrecke (HKS) - in Richtung aus der Ebene (EB) heraus und in den zweiten Wellenleiter (50) hinein koppeln kann und/oder in dem zweiten Wellenleiter (50) geführte und von diesem in das Koppelelement (20) eingespeiste optische Strahlung - entlang der Hauptkoppelstrecke (HKS) - in den ersten Wellenleiter (10) und damit in die Ebene (EB) des Bauelements (5) hinein koppeln kann,
- der integrierte optische Wellenleiter (10) und das Koppelelement (20) in einem Halbleiterchip (40) des Bauelements (5) integriert sind, und
- anhand des Detektorsignals (DS) mittels eines Heizelements zumindest eine Betriebgröße des optoelektronischen Bauelements (5) beeinflusst wird, nämlich die Temperatur des Halbleiterchips (40) des optoelektronischen Bauelements (5).

## Claims

1. Optoelectronic component (5) having
- an optical waveguide (10) which is integrated in a plane (EB) of the component (5) and which is able to guide optical radiation in the plane (EB) of the component (5), and
- a coupling element (20) which is connected to the waveguide (10) and which is able to couple optical radiation which is guided in the waveguide (10) and which is fed from said waveguide into the coupling element (20), out of the plane (EB), along a main coupling path (HKS), and/or is able to couple optical radiation which is fed at an angle into the plane (EB) of the waveguide (10), into the waveguide (10) and thus into the plane (EB) of the component (5), along the main coupling path (HKS),
- wherein the coupling efficiency of the coupling element (20) with respect to the main coupling path (HKS) is less than one, and in the case of irradiation of optical radiation, the coupling element (20) emits an optical radiation loss (D) along an auxiliary coupling path (NKS) which is proportional or at least approximately proportional to the radiation transmitted along the main coupling path (HKS), and
- wherein the optoelectronic component (5) has a detector (30) which is connected to the coupling element (20) and which completely or at least partially detects the optical radiation loss (D) and generates a detector signal (DS), wherein
- in addition to the aforementioned waveguide (10), hereinafter referred to as the first waveguide (10), the optoelectronic component (5) has a second waveguide (50) which is arranged with its longitudinal axis at an angle to the plane (EB) within which the integrated optical waveguide (10) is integrated and is able to guide radiation, and
- the coupling element (20) is connected to the first and second waveguides (10, 50) and is able to couple the optical radiation which is guided in the first waveguide (10) and which is fed into the coupling element (20) in the direction out of the plane (EB) and into the second waveguide (50), along the main coupling path (HKS), and/or is able to couple optical radiation which is guided in the second waveguide (50) and which is fed from it into the coupling element (20), into the first waveguide (10) and thus into the plane (EB) of the component (5), along the main coupling path (HKS),
- the integrated optical waveguide (10) and the coupling element (20) integrated in a semiconductor chip (40) of the component (5), and
- the optoelectronic component (5) has a control unit (100) which is connected to the detector (30) and which, based on the detector signal (DS), influences at least one operating variable of the optoelectronic component (5), specifically the temperature of the semiconductor chip (40) of the optoelectronic component (5), by means of a heating element.

2. Optoelectronic component (5) according to Claim 1, **characterized in that**
- the optoelectronic component (5) has a transmitting element (200), in particular a transmitting element (200) which is connected to the first or second waveguide (10, 50), and
- the control unit (100) is designed in such a way that, based on the detector signal (DS), said control unit influences the transmitting power of the transmitting element (200) as the operating variable or one of the operating variables of the optoelectronic component (5).

3. Optoelectronic component (5) according to either of of the preceding claims,
**characterized in that**
the normal of the opening cross section (A) of the coupling front surface (31) of the detector (30) is parallel to the plane (EB) of the component (5) within which the first waveguide (10) is integrated and is able to guide its optical radiation.

4. Optoelectronic component (5) according to any one of the preceding claims,
**characterized in that**
- the component (5) is formed by a semiconductor chip (40), and
- the plane (EB) in which the first waveguide (10) is able to guide optical radiation is a chip plane of the semiconductor chip (40), in particular a layer plane of a semiconductor layer (41) of a layer stack of the semiconductor chip (40).

5. Optoelectronic component (5) according to any one of the preceding claims,
**characterized in that**
the coupling element (20) couples optical radiation which is fed in at an angle into the plane (EB) of the first waveguide (10) and into the coupling element (20), along at least two main coupling paths (HKS1, HKS2), into the first waveguide (10) and into at least one additional waveguide (300) which lies in the same plane (EB) of the component (5) as the first waveguide (10), and is able to guide optical radiation there.

6. Optoelectronic component (5) according to Claim 5, **characterized in that**
the coupling efficiency of the coupling element (20) with respect to the at least two main coupling paths (HKS1, HKS2) is less than one in each case, and the coupling element (20) has one associated auxiliary coupling path (NKS) per main coupling path (HKS1, HKS2).

7. Optoelectronic component (5) according to Claim 6, **characterized in that**
- in the case of angular irradiation of optical radiation into the plane (EB) of the waveguide (10), in particular in the case of irradiation of optical radiation via the second waveguide (50), i.e., in the case of radiation deflection along the at least two main coupling paths (HKS1, HKS), the coupling element (20) emits an optical radiation loss (D, D2) along each of the auxiliary coupling paths, which is proportional or at least approximately proportional to the radiation transmitted along the respective main coupling path (HKS1, HKS2), and
- the detector (30) completely or at least partially detects at least one of the radiation losses (D, D2), preferably all radiation losses.

8. Optoelectronic component (5) according to any one of the preceding Claims 5 to 7,
**characterized in that**
the coupling element (20) couples the optical radiation which is guided in the first waveguide and/or one of the additional waveguides (10, 300) and which is fed from said waveguide into the coupling element (20), out of the plane (EB) of the waveguides (10) at an angle, along the respective main coupling paths (HKS1, HKS2), in particular into the second waveguide (50).

9. Optoelectronic component (5) according to any one of the preceding claims,
**characterized in that**
- the detector (30) is or comprises a photodiode which has a detector layer for receiving radiation, and
- the detector layer lies in the plane (EB) within which the first waveguide (10) is integrated and is able to guide radiation, and/or lies in a parallel plane (EB).

10. Optoelectronic component (5) according to any one of the preceding claims,
**characterized in that**
the coupling element (20) comprises a grating, a mirror, and/or a photonic crystal structure.

11. Optoelectronic component (5) according to any one of the preceding claims,
**characterized in that**
- the integrated optical waveguide (10) is rectilinear in the region of the coupling element (20) and has two rectilinear waveguide sections (11, 12, 501, 502) which are directly adjacent to the coupling element (20), and
- the two rectilinear waveguide sections (11, 12, 501, 502) are aligned, viewed in the longitudinal direction of the waveguide or along the direction of propagation of the optical radiation.

12. Optoelectronic component (5) according to Claim 11, **characterized in that**
- one of the two rectilinear waveguide sections (12, 501) forms the main coupling path (HKS) or at least a section of the main coupling path (HKS), and
- the other one of the two rectilinear waveguide sections (11, 502) forms the auxiliary coupling path (NKS) or at least a section of the auxiliary coupling path (NKS).

13. Optoelectronic component (5) according to any one of the preceding claims,
**characterized in that**
- the integrated optical waveguide (10), hereinafter referred to as the first waveguide, is rectilinear in the region of the coupling element (20) and has two rectilinear waveguide sections (501, 502) which are directly adjacent to the coupling element (20) and are aligned, viewed in the longitudinal direction of the waveguide or along the direction of propagation of the optical radiation,
- the coupling element (20) couples optical radiation which is fed in at an angle into the plane (EB) of the first waveguide (10) and into the coupling element (20), along at least two main coupling paths (HKS1, HKS2), into the first waveguide (10) and into at least one additional waveguide (300) which lies in the same plane (EB) of the component (5) as the first waveguide (10) and is able to guide optical radiation there, and
- the at least one additional waveguide is rectilinear in the region of the coupling element (20) and has two rectilinear waveguide sections (511, 512) which are directly adjacent to the coupling element (20) and are aligned, viewed in the longitudinal direction of the waveguide or along the direction of propagation of the optical radiation.

14. Method for operating an optoelectronic component (5) having an optical waveguide (10) which is integrated within a plane (EB) of the component (5) and which is able to guide optical radiation in the plane (EB) of the component (5), and a coupling element (20) which is connected to the waveguide (10) and which is able to couple optical radiation which is guided in the waveguide (10) and which is fed from said waveguide into the coupling element (20), out of the plane (EB), along a main coupling path (HKS), and/or is able to couple optical radiation which is fed at an angle into the plane (EB) of the waveguide (10), into the waveguide (10) and thus into the plane (EB) of the component (5), along the main coupling path (HKS),
- wherein the coupling efficiency of the coupling elements (20) with respect to the main coupling path (HKS) is less than one, and in the case of irradiation of optical radiation, the coupling element (20) emits an optical radiation loss (D) along an auxiliary coupling path (NKS) which is proportional or at least approximately proportional to the radiation transmitted along the main coupling path (HKS), and
- wherein the optical radiation loss (D) is completely or at least partially detected and a detector signal (DS) is generated, wherein
- in addition to the aforementioned waveguide (10), hereinafter referred to as the first waveguide (10), the optoelectronic component (5) has a second waveguide (50) which is arranged with its longitudinal axis at an angle to the plane (EB) within which the integrated optical waveguide (10) is integrated and is able to guide radiation, and
- the coupling element (20) is connected to the first and second waveguides (10, 50) and is able to couple the optical radiation which is guided in the first waveguide (10) and which is fed into the coupling element (20) in the direction out of the plane (EB) and into the second waveguide (50), along the main coupling path (HKS), and/or is able to couple optical radiation which is guided in the second waveguide (50) and which is fed from it into the coupling element (20), into the first waveguide (10) and thus into the plane (EB) of the component (5), along the main coupling path (HKS),
- the integrated optical waveguide (10) and the coupling element (20) are integrated in a semiconductor chip (40) of the component (5), and
- based on the detector signal (DS), at least one operating variable of the optoelectronic component (5) is influenced, specifically the temperature of the semiconductor chip (40) of the optoelectronic component (5), by means of a heating element.

## Revendications

1. Composant optoélectronique (5) comprenant
- un guide d'onde optique (10) qui est intégré dans un plan (EB) du composant (5) et qui peut guider un rayonnement optique dans le plan (EB) du composant (5), et
- un élément de couplage (20) qui est en liaison avec le guide d'ondes (10) et qui peut délivrer par couplage hors du plan (EB) un rayonnement optique guidé dans le guide d'ondes (10) et injecté par celui-ci dans l'élément de couplage (20), le long d'un trajet de couplage principal (HKS), et/ou qui peut injecter par couplage un rayonnement optique, injecté angulairement dans le plan (EB) du guide d'ondes (10), dans le guide d'ondes (10) et ainsi dans le plan (EB) du composant (5), le long du trajet de couplage principal (HKS),
- le rendement de couplage de l'élément de couplage (20) par rapport au trajet de couplage principal (HKS) étant inférieure à un et, lorsqu'un rayonnement optique est incident, l'élément de couplage (20) délivrant en sortie le long d'un trajet de couplage secondaire (NKS) un rayonnement de perte optique (D) qui est proportionnel ou au moins à peu près proportionnel au rayonnement transmis le long du trajet de couplage principal (HKS), et
- le composant optoélectronique (5) comportant un détecteur (30) qui est en liaison avec l'élément de couplage (20) et qui détecte entièrement ou au moins partiellement le rayonnement de perte optique (D) et génère un signal de détecteur (DS),
- le composant optoélectronique (5) comportant en plus du guide d'ondes (10) déjà mentionné, ci-après dénommé premier guide d'ondes (10), un deuxième guide d'ondes (50) dont l'axe longitudinal est disposé angulairement par rapport au plan (EB), dans lequel le guide d'ondes optique intégré (10) est intégré, et qui peut guider un rayonnement, et
- l'élément de couplage (20) étant en liaison avec les premier et deuxième guides d'ondes (10, 50) et pouvant délivrer par couplage hors du plan (EB) le rayonnement optique, guidé dans le premier guide d'ondes (10) et injecté dans l'élément de couplage (20), et l'injecter par couplage dans le deuxième guide d'ondes (50) le long du trajet de couplage principal (HKS) et/ou pouvant injecter par couplage un rayonnement optique, guidé dans le deuxième guide d'ondes (50) et injecté par celui-ci dans l'élément de couplage (20), dans le premier guide d'onde (10) et donc dans le plan (EB) du composant (5) le long du trajet de couplage principal (HKS),
- le guide d'ondes optique intégré (10) et l'élément de couplage (20) étant intégrés dans une puce de semi-conducteur (40) du composant (5), et
- le composant optoélectronique (5) comportant une unité de commande (100) qui est en liaison avec le détecteur (30) et qui influe au moyen d'un élément chauffant, sur la base du signal de détecteur (DS), sur au moins une grandeur de fonctionnement du composant optoélectronique (5), à savoir la température de la puce de semi-conducteur (40) du composant optoélectronique (5).

2. Composant optoélectronique (5) selon la revendication 1,
**caractérisé en ce que**
- le composant optoélectronique (5) comporte un élément d'émission (200), en particulier un élément d'émission (200) en liaison avec le premier ou deuxième guide d'ondes (10, 50), et
- l'unité de commande (100) est conçue de manière à influer, sur la base du signal de détecteur (DS), sur la puissance d'émission de l'élément d'émission (200) en tant que grandeur de fonctionnement ou une des grandeurs de fonctionnement du composant optoélectronique (5).

3. Composant optoélectronique (5) selon l'une des revendications précédentes,
**caractérisé en ce que**
la normale de section d'ouverture (A) de la surface frontale d'injection par couplage (31) du détecteur (30) est parallèle au plan (EB) du composant (5) dans lequel le premier guide d'onde (10) est intégré et peut guider son rayonnement optique.

4. Composant optoélectronique (5) selon l'une des revendications précédentes,
**caractérisé en ce que**
- le composant (5) est formé par une puce de semi-conducteur (40) et
- le plan (EB), dans lequel le premier guide d'onde (10) peut guider le rayonnement optique, est un plan de la puce de semi-conducteur (40), en particulier un plan d'une couche de semi-conducteur (41) d'un empilement de couches de la puce de semi-conducteur (40).

5. Composant optoélectronique (5) selon l'une des revendications précédentes,
**caractérisé en ce que**
l'élément de couplage (20) injecte par couplage un rayonnement optique, injecté angulairement dans le plan (EB) du premier guide d'ondes (10) et dans l'élément de couplage (20), dans le premier guide d'ondes (10) et dans au moins un autre guide d'ondes (300), qui se trouve dans le même plan (EB) du composant (5) que le premier guide d'ondes (10) et qui peut guider dans ledit plan le rayonnement optique, le long d'au moins deux trajets de couplage principaux (HKS1, HKS2).

6. Composant optoélectronique (5) selon la revendication 5,
**caractérisé en ce que**
le rendement de couplage de l'élément de couplage (20) par rapport à chacun des au moins deux trajets de couplage principaux (HKS1, HKS2) est inférieur à un et l'élément de couplage (20) comporte un trajet de couplage secondaire associé (NKS) pour chaque trajet de couplage principal (HKS1, HKS2).

7. Composant optoélectronique (5) selon la revendication 6,
**caractérisé en ce que**
- lorsqu'un rayonnement optique est incident angulairement dans le plan (EB) du guide d'ondes (10), en particulier lorsqu'un rayonnement optique est incident à travers le deuxième guide d'ondes (50), donc lorsqu'un rayonnement est dévié le long des au moins deux trajets de couplage principaux (HKS1, HKS), l'élément de couplage (20) émet, le long de chacun des trajets de couplage secondaires, un rayonnement de perte optique (D, D2) qui est proportionnel ou au moins à peu près proportionnel au rayonnement transmis le long du trajet de couplage principal respectif (HKS1, HKS2), et
- le détecteur (30) détecte entièrement ou au moins partiellement au moins un rayonnement de perte {D, D2), de préférence tous les rayonnements de perte.

8. Composant optoélectronique (5) selon l'une des revendications précédentes 5 à 7,
**caractérisé en ce que**
l'élément de couplage (20) délivre par couplage angulairement hors du plan (EB) du guide d'ondes (10) le rayonnement optique qui est guidé dans le premier et/ou l'un des autres guides d'ondes (10, 300) et injecté par celui-ci dans l'élément de couplage (20), le long des trajets de couplage principaux respectifs (HKS1, HKS2), en particulier l'injecte par couplage dans le deuxième guide d'ondes (50).

9. Composant optoélectronique (5) selon l'une des revendications précédentes,
**caractérisé en ce que**
- le détecteur (30) est une photodiode qui comporte une couche de détection destinée à recevoir un rayonnement ou comprend une telle couche et
- la couche de détection est située dans le plan (EB) dans lequel le premier guide d'ondes (10) est intégré et peut guider un rayonnement, et/ou est située dans un plan (EB) parallèle à celui-ci.

10. Composant optoélectronique (5) selon l'une des revendications précédentes,
**caractérisé en ce que**
l'élément de couplage (20) comprend un réseau, un miroir et/ou une structure cristalline photonique.

11. Composant optoélectronique (5) selon l'une des revendications précédentes,
**caractérisé en ce que**
- le guide d'ondes optique intégré (10) est rectiligne au niveau de l'élément de couplage (20) et comporte deux portions de guide d'ondes rectilignes (11, 12, 501, 502) qui sont directement adjacentes à l'élément de couplage (20), et
- les deux portions de guide d'ondes rectilignes (11, 12, 501, 502) sont alignées lorsque l'on regarde dans la direction longitudinale du guide d'ondes ou le long de la direction de propagation du rayonnement optique.

12. Composant optoélectronique (5) selon la revendication 11,
**caractérisé en ce que**
- l'une des deux portions de guide d'ondes rectilignes (12, 501) forme le trajet de couplage principal (HKS) ou forme au moins une portion du trajet de couplage principal (HKS) et
- l'autre des deux portions de guide d'ondes rectilignes (11, 502) forme le trajet de couplage secondaire (NKS) ou forme au moins une portion du trajet de couplage secondaire (NKS).

13. Composant optoélectronique (5) selon l'une des revendications précédentes,
**caractérisé en ce que**
- le guide d'ondes optique intégré (10), ci-après dénommé premier guide d'ondes, est rectiligne au niveau de l'élément de couplage (20) et comporte deux portions de guide d'ondes rectilignes (501, 502) qui sont directement adjacentes à l'élément de couplage (20) et sont alignées lorsque l'on regarde dans la direction longitudinale du guide d'onde ou le long de la direction de propagation du rayonnement optique,
- l'élément de couplage (20) injecte par couplage un rayonnement optique, injecté angulairement dans le plan (EB) du premier guide d'ondes (10) et dans l'élément de couplage (20), dans le premier guide d'ondes (10) et dans au moins un autre guide d'ondes (300), qui se trouve dans le même plan (EB) du composant (5) que le premier guide d'ondes (10) et qui peut guider le rayonnement optique dans ledit plan, le long d'au moins deux trajets de couplage principaux (HKS1, HKS2) et
- l'au moins un autre guide d'ondes est rectiligne au niveau de l'élément de couplage (20) et comporte deux portions de guide d'ondes rectilignes (511, 512) qui sont directement adjacentes à l'élément de couplage (20) et qui sont alignées lorsque l'on regarde dans la direction longitudinale du guide d'ondes ou le long de la direction de propagation du rayonnement optique.

14. Procédé de fonctionnement d'un composant optoélectronique (5) comprenant un guide d'onde optique (10) qui est intégré dans un plan (EB) du composant (5) et qui peut guider un rayonnement optique dans le plan (EB) du composant (5), et un élément de couplage (20) qui est en liaison avec le guide d'ondes (10) et qui peut délivrer par couplage hors du plan (EB) un rayonnement optique guidé dans le guide d'ondes (10) et injecté par celui-ci dans l'élément de couplage (20), le long d'un trajet de couplage principal (HKS), et/ou qui peut injecter par couplage un rayonnement optique, injecté angulairement dans le plan (EB) du guide d'ondes (10), dans le guide d'ondes (10) et ainsi dans le plan (EB) du composant (5), le long du trajet de couplage principal (HKS),
- le rendement de couplage de l'élément de couplage (20) par rapport au trajet de couplage principal (HKS) étant inférieure à un et, lorsqu'un rayonnement optique est incident, l'élément de couplage (20) délivrant en sortie le long d'un trajet de couplage secondaire (NKS) un rayonnement de perte optique (D) qui est proportionnel ou au moins à peu près proportionnel au rayonnement transmis le long du trajet de couplage principal (HKS), et
- le rayonnement de perte optique (D) étant détecté entièrement ou au moins partiellement et un signal de détecteur (DS) étant généré,
- le composant optoélectronique (5) comportant en plus du guide d'ondes (10) déjà mentionné, ci-après dénommé premier guide d'ondes (10), un deuxième guide d'ondes (50) dont l'axe longitudinal est disposé angulairement par rapport au plan (EB), dans lequel le guide d'ondes optique intégré (10) est intégré, et qui peut guider un rayonnement, et
- l'élément de couplage (20) étant en liaison avec les premier et deuxième guides d'ondes (10, 50) et pouvant délivrer par couplage hors du plan (EB) le rayonnement optique, guidé dans le premier guide d'ondes (10) et injecté dans l'élément de couplage (20), et l'injecter par couplage dans le deuxième guide d'ondes (50) le long du trajet de couplage principal (HKS) et/ou pouvant injecter par couplage un rayonnement optique, guidé dans le deuxième guide d'ondes (50) et injecté par celui-ci dans l'élément de couplage (20), dans le premier guide d'onde (10) et donc dans le plan (EB) du composant (5) le long du trajet de couplage principal (HKS),
- le guide d'ondes optique intégré (10) et l'élément de couplage (20) étant intégrés dans une puce de semi-conducteur (40) du composant (5), et
- un élément chauffant influant, sur la base du signal de détecteur (DS), sur au moins une grandeur de fonctionnement du composant optoélectronique (5), à savoir la température de la puce de semi-conducteur (40) du composant optoélectronique (5).
